# EUROPÄISCHE PATENTSCHRIFT

(11) **EP 3 905 512 B1**
(45) Veröffentlichungstag und Bekanntmachung des Hinweises auf die Patenterteilung: **07.05.2025**
(21) Anmeldenummer: 21165103.9
(22) Anmeldetag: 26.03.2021
(51) Int. Cl.: H02P 6/26, H02P 25/04, H02P 27/06

(54) **HAUSHALTSGERÄT MIT EINEM AUF EIN WECHSELSPANNUNGSNETZ AUFSCHALTBAREN MOTOR**
HOUSEHOLD APPLIANCE WITH A MOTOR WHICH CAN BE SWITCHED ON TO AN ALTERNATING VOLTAGE NETWORK
APPAREIL ÉLECTROMÉNAGER DOTÉ D'UN MOTEUR POUVANT ÊTRE CONNECTÉ À UN RÉSEAU À TENSION ALTERNATIVE

(30) Priorität: 27.04.2020 DE 102020111362
(43) Veröffentlichungstag der Anmeldung: 03.11.2021
(73) Patentinhaber: Miele & Cie. KG, 33332 Gütersloh (DE)
(72) Erfinder: Rech, Thomas, 53881 Euskirchen (DE); Zinkann, Peter, 33332 Gütersloh (DE); Schaefer-van den Boom, Klaus, 53489 Sinzig (DE)

(56) Entgegenhaltungen:
- EP-A1- 0 813 293
- DE-A1- 102007 030 634
- JP-A- 2007 322 036
- JP-A- S63 167 698
- US-A1- 2009 218 962

## Beschreibung

Die Erfindung betrifft ein Haushaltsgerät, dass einen elektrischen Synchronmotor aufweist, der zwischen dem Betrieb an einem Wechselspannungsnetz mit fester Frequenz und dem Betrieb an einem Frequenzumrichter umschaltbar ist.

Zurzeit gibt es in Haushaltsgeräten, beispielsweise im Geschirrspüler oder im Waschautomaten, Motoren in z.B. Laugenpumpen, welche als einsträngige Permanentmagnet-Synchronmotoren ausgeführt sind. Diese werden bislang am üblichen Haushalts-Wechselspannungsnetz mit fester Frequenz von 50 Hz betrieben. Aufgrund der starren Netzfrequenz ergibt sich eine von der Ausführung des Motors abhängige, aber für einen gegebenen Motor unveränderliche Betriebs-Drehzahl.

Da die Netzfrequenz fest ist, müsste der Motor beim Anlaufen aus dem Stillstand quasi instantan mit der durch die Bauart und Netzfrequenz vorgegebenen Drehzahl laufen. Da dies aufgrund der Trägheit nicht ohne weiteres möglich ist, kann ein direkter Anlauf am Wechselspannungsnetz in der Regel nicht erfolgen. Nachteilig sind ferner die aufgrund der unveränderlichen Betriebsdrehzahl fehlende Drehzahlvariabilität und die nicht vorhandene Lastsensierung. Auch das akustische Verhalten kann nachteilig sein.

Abhilfe schafft hierbei die Verwendung eines Frequenzumrichters, welcher einen geregelten Betrieb mit vielen Vorteilen bieten kann. Die 1-strängige Permanentmagnet-Synchron-Maschine kann für den Betrieb an einem Frequenzumrichter optimiert ausgelegt sein. Ebenso kann die Auslegung auf das Anlaufverhalten hin optimiert werden (beispielsweise Asymmetrien im Schnitt). Eine Drehzahlsteuerung sowie eine Lastsensierung werden hierdurch ermöglicht. Ein Frequenzumrichter bedingt wiederum eine erhöhte Komplexität und auch höhere Kosten eines entsprechend ausgerüsteten Haushaltsgeräts. Auch kann die Effizienz geringer ausfallen, da im Umrichter zwangsläufig Verluste entstehen. Dies im Gegensatz zu einem Betrieb am starren Netz, bei dem keine Verluste durch einen Umrichter anfallen. Bei geregeltem Betrieb des Motors am Umrichter kann aufgrund der optimalen Ansteuerung die Effizienz in bestimmten Betriebspunkten allerdings auch höher sein als beim Betrieb am starren Netz (z.B. bei Übererregung des Motors). EP 0 813 293 A1 offenbart ein Haushaltsgerät, welches von einem Frequenzumrichter hochgefahren wird. Dokument US 2009/218962 A1 offenbart den Betrieb von mehreren Motoren an einem Netz, welche zuvor von einem Frequenzumrichter hochgefahren wurden.

Der geregelte Betrieb mehrerer Permanentmagnet-erregter Synchronmaschinen (PMSM) - vor allem bei beliebiger Drehzahl und Drehrichtung sowie optimierter Effizienz und Lastsensierung - erfordert herkömmlicherweise mehrere Frequenzumrichter (EFU). Dies führt zu Mehrkosten, auch wenn sich bei den EFU gewisse Schaltungsteile (z.B. Spannungszwischenkreis oder Netzteil) gemeinsam nutzen lassen.

Der Erfindung stellt sich somit das Problem, ein verbessertes Haushaltsgerät zum Betrieb an einem Wechselspannungsnetz mit fester Frequenz mit einem oder mehreren Synchronmotoren bereitzustellen.

Erfindungsgemäß wird dieses Problem durch ein Haushaltsgerät mit den Merkmalen des Patentanspruchs 1 gelöst. Vorteilhafte Ausgestaltungen und Weiterbildungen der Erfindung ergeben sich aus den nachfolgenden Unteransprüchen.

Gemäß einem ersten Aspekt wird ein Haushaltsgerät zum Betrieb an einem Wechselspannungsnetz mit fester Frequenz, umfassend:
- mindestens einen elektrischen Synchronmotor;
- einen Frequenzumrichter;
- eine Schaltvorrichtung, die dazu eingerichtet ist, den mindestens einen Synchronmotor wahlweise entweder mit dem Frequenzumrichter oder dem Wechselspannungsnetz zu verbinden; und
- eine Steuereinheit, die dazu eingerichtet ist
- den mindestens einen Synchronmotor mittels der Schaltvorrichtung mit dem Frequenzumrichter zu verbinden, um den Synchronmotor anlaufen zu lassen, wobei der Frequenzumrichter mit einer Frequenz betrieben wird, die geringer ist als die feste Frequenz des Wechselspannungsnetzes;
- nach dem Anlaufen des Synchronmotors die Frequenz des Frequenzumrichters zu erhöhen; und
- den mindestens einen Synchronmotor mittels der Schaltvorrichtung von dem Frequenzumrichter zu trennen und mit dem Wechselspannungsnetz zu verbinen und den mindestens einen Synchronmotor (M1, M2, M3, Mx) sporadisch mit dem Frequenzumrichter (1) zu betreiben, um eine Lastsensierung vorzunehmen

Durch die Verwendung des Frequenzumrichters kann der Synchronmotor gesteuert und somit zuverlässig anlaufen und nach dem Anlauf auf den Betrieb am starren Netz umgeschaltet werden. Dadurch kann ein Betrieb mit hoher Effizienz erzielt werden, da die Umrichterverluste nur beim Anlaufen auftreten.

Bevorzugt wird ein Anlauf mit einer niedrigeren Frequenz als der des Wechselspannungsnetzes ausgeführt. Grundsätzlich möglich ist aber auch ein Anlauf mit einer höheren Frequenz, sofern sich daraus Vorteile ergeben.

Gemäß einer Ausführungsform ist die Steuereinheit weiter dazu eingerichtet, den mindestens einen Synchronmotor mittels der Schaltvorrichtung von dem Wechselspannungsnetz zu trennen und mit dem Frequenzumrichter zu verbinden.

Dadurch kann der Synchronmotor für bestimmte Aufgaben auf den Betrieb mit dem Frequenzumrichter umgeschaltet werden. Beispielsweise für Antriebsaufgaben, die nicht die Drehzahl benötigen, die sich bei Betrieb am starren Netz ergibt. Eine Lastsensierung kann durch Umschalten auf den Frequenzumrichter ermöglicht werden. Auch kann hiermit ein gesteuertes Auslaufenlassen ermöglicht werden.

Durch die flexible Umschaltbarkeit zwischen Frequenzumrichter und Wechselspannungsnetz für einen gegebenen Motor sind vielfältige Anwendungsmöglichkeiten gegeben. Beispielsweise könnte die meiste Zeit der effiziente Betrieb am Wechselspannungsnetz vorgesehen werden und nur sporadisch ein Betrieb mit dem Frequenzumrichter, um eine Lastsensierung vorzunehmen oder kurzzeitig dem Motor mit einer höheren als der Netzfrequenz zu betrieben. Ein für den zeitlich am häufigsten vorliegenden Betriebspunkt am starren Netz optimierter Motor könnte dennoch flexibel mit anderen Betriebspunkten betrieben werden, wenn der Programmablauf des Haushaltsgeräts dies für seltenere Fälle/kürzere Betriebsdauern erfordert.

Gemäß einer Ausführungsform werden die Frequenz und Phasenlage des Frequenzumrichters vor dem Umschalten des Synchronmotors zwischen Frequenzumrichter und Wechselspannungsnetz an die Frequenz und Phasenlage des Wechselspannungsnetzes angenähert, bevorzugt auf im Wesentlichen die gleiche Frequenz und Phasenlage.

Um ein reibungsloses Umschalten zu gewährleisten, kann es erforderlich sein, dass Frequenz und/oder Phasenlage vor dem Umschalten angeglichen werden, bevorzugt auf identische Werte. Es kann alternativ aber auch genügen, Frequenz und/oder Phasenlage innerhalb eines Toleranzfensters nur annähernd anzugleichen.

Gemäß einer Ausführungsform umfasst das Haushaltsgerät zwei oder mehr elektrische Synchronmotoren.

Erfindungsgemäß können mit nur einem Frequenzumrichter zwei oder mehr elektrische Synchronmotoren betrieben werden. Es ist möglich, wahlweise einzelne oder mehrere der Synchronmotoren mit dem Frequenzumrichter anlaufen zu lassen und dann an das starre Wechselspannungsnetz zu übergeben. Der Frequenzumrichter steht dann wieder zur Verfügung, um andere der Motoren zu betreiben. Der umgekehrte Weg ist ebenso möglich, d.h. einzelne oder mehrere Motoren, die an dem Wechselspannungsnetz betrieben werden, können gezielt mit dem Frequenzumrichter betrieben werden, um andere Drehzahlen zu verwenden und/oder eine Lastsensierung zu ermöglichen.

Gemäß einer Ausführungsform ist das Wechselspannungsnetz ein 1-phasiges Netz, ist mindestens ein Synchronmotor 3-strängig und wird mit einem Hilfs-Kondensator an dem Wechselspannungsnetz betrieben.

Gemäß einer Ausführungsform ist das Wechselspannungsnetz ein 1-phasiges Netz, ist mindestens ein Synchronmotor 2-strängig und wird mit einem Hilfs-Kondensator an dem Wechselspannungsnetz betrieben.

Gemäß einer Ausführungsform ist das Wechselspannungsnetz mit fester Frequenz ein 1-phasiges Netz, ist der Frequenzumrichter 3-phasig (R, S, T), ist mindestens ein Synchronmotor 3-strängig und wird mit einem Hilfs-Kondensator an dem Wechselspannungsnetz betrieben.

Gemäß einer Ausführungsform ist das Wechselspannungsnetz mit fester Frequenz ein 1-phasiges Netz, ist der Frequenzumrichter 3-phasig (R, S, T), ist mindestens ein Synchronmotor 1-strängig und wird an 2 Phasen (R, S) des Frequenzumrichters betrieben.

Gemäß einer Ausführungsform ist das Wechselspannungsnetz mit fester Frequenz ein 1-phasiges Netz, ist der Frequenzumrichter 3-phasig (R, S, T), ist mindestens ein Synchronmotor 2-strängig und wird mit einem Hilfs-Kondensator an dem Wechselspannungsnetz betrieben.

Gemäß einer Ausführungsform ist das Wechselspannungsnetz mit fester Frequenz ein 1-phasiges Netz, ist der Frequenzumrichter 2-phasig, ist mindestens ein Synchronmotor 2-strängig und wird mit einem Hilfs-Kondensator an dem Frequenzumrichter oder einem Hilfskondensator an dem Wechselspannungsnetz betrieben.

Dabei kann entweder der gleiche oder es können zwei verschiedene Kondensatoren verwendet werden.

Gemäß einer Ausführungsform ist das Wechselspannungsnetz mit fester Frequenz ein 1-phasiges Netz, ist der Frequenzumrichter 2-phasig und ist mindestens ein Synchronmotor 1-strängig.

Ein Ausführungsbeispiel der Erfindung ist in den Zeichnungen rein schematisch dargestellt und wird nachfolgend näher beschrieben. Es zeigt
- Figur 1: eine erste Ausführungsform;
- Figur 2: eine zweite Ausführungsform; und
- Figur 3: eine dritte Ausführungsform.

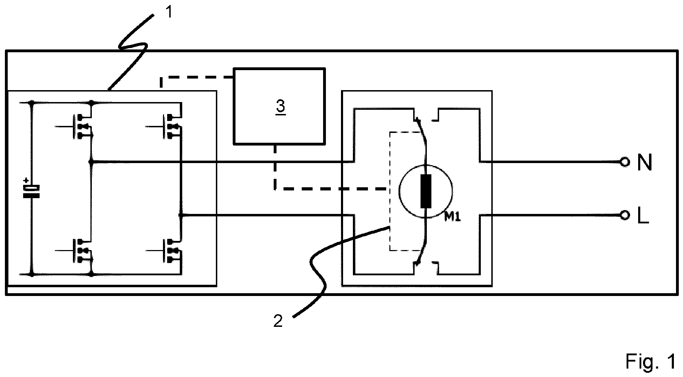

In Figur 1 ist eine erste Ausführungsform schematisch gezeigt. Ein Frequenzumrichter 1 umfasst beispielsweise 2 Halbbrücken, die aus einem Gleichstromzwischenkreis versorgt werden. Anschlusspunkte N, L für ein Wechselspannungsnetz wie beispielsweise ein herkömmliches Haushaltsstromnetz mit 230V / 50 Hz sind vorhanden. Ein Motor M1 kann wahlweise über eine Schaltvorrichtung 2 mit den Ausgängen des Frequenzumrichters 1 oder dem Wechselspannungsnetz N, L verbunden werden. Gesteuert wird die Umschaltung über eine Steuereinheit 3, die mit der Schaltvorrichtung 2 sowie dem Frequenzumrichter 1 verbunden ist. Die Steuereinheit kann den Frequenzumrichter steuern, um dessen Frequenz und Phasenlage einzustellen. Die Ausführungsform wird in einem (nicht gezeigten) Haushaltsgerät eingesetzt, wie beispielsweise einem Waschautomaten, Trockner, Geschirrspüler oder Gargerät. Grundsätzlich kommt hier jedes Haushaltsgerät in Frage.

Diese erste Ausführungsform gestattet es, den Motor M1 wahlweise über den Frequenzumrichter 1 oder das Wechselspannungsnetz N, L zu betreiben. Im Betrieb mit dem Frequenzumrichter 1 ist ein sanftes Anlaufen mit insbesondere niedrigerer Frequenz als die des Wechselspannungsnetzes möglich, weiterhin ist ein Betrieb mit variabler Drehzahl möglich sowie eine Lastsensierung. Grundsätzlich ist auch ein Anlaufen mit einer höheren Frequenz als der des starren Wechselspannungsnetzes möglich.

Im Betrieb am Wechselspannungsnetz N, L ist nur ein ungeregelter Betrieb mit einer Drehzahl möglich, die sich aus der Bauart des Motors M1 und der Netzfrequenz ergibt. Dafür ist jedoch die Effizienz erhöht, da Verluste des Frequenzumrichters 1 entfallen. Der Frequenzumrichter 1 kann durch die Steuereinheit 3 abgeschaltet werden.

Erfindungsgemäß ist es nun möglich, den Motor M1, etwa aus dem Stillstand, mittels des Frequenzumrichters 1 anlaufen zu lassen, d.h. die Schaltvorrichtung 2 verbindet den Motor M1 mit dem Frequenzumrichter. Dabei ist die Frequenz und somit die Motordrehzahl in der Regel geringer als die des Wechselspannungsnetzes N, L bzw. die dadurch vorgegebene Drehzahl. Nach dem Anlaufen kann die Frequenz des Frequenzumrichters 1 und somit die Motordrehzahl erhöht werden. Durch die Steuereinheit 3 kann dann - vorzugsweise nachdem die Frequenz (und auch Phasenlage) an die des Wechselspannungsnetzes N, L angeglichen wurden - die Schaltvorrichtung 2 den Motor M1 vom Frequenzumrichter 1 trennen und den Motor M1 mit dem Wechselspannungsnetz N, L verbinden. Anschließend kann der Frequenzumrichter 1 abgeschaltet werden, um Energie zu sparen.

Umgekehrt kann während des Betriebs des Motors M1 am Wechselspannungsnetz N, L ein Umschalten zu dem Frequenzumrichter 1 erfolgen, ebenfalls vorzugsweise nach Angleichen von Frequenz und Phasenlage. Dies kann den Zweck haben, den Motor M1 zeitweise mit einer anderen festen oder variablen Drehzahl betreiben zu können, um die damit angetriebene Pumpe oder das Gebläse mit anderer (höherer oder niedrigerer) Leistung zu betreiben. Alternativ oder zusätzlich kann auch eine Lastsensierung erfolgen. Diese kann sogar bei der gleichen Drehzahl wie am Wechselspannungsnetz N, L erfolgen, so dass ein quasi unterbrechungsfreier Betrieb mit gleichbleibender Drehzahl, aber Lastsensierung möglich ist.

Je nach Bedarf kann der Motor M1 somit zwischen einem Betrieb am Frequenzumrichter 1 mit erhöhtem Energieverbrauch, aber variabler Drehzahl und der Möglichkeit der Lastsensierung, und einem ungeregelten, aber effizienteren Betrieb am Wechselspannungsnetz N, L umgeschaltet werden. Am Frequenzumrichter ist in einer bevorzugten Ausführungsform auch eine Wahl der Drehrichtung möglich, d.h. die Drehrichtung kann im Frequenzumrichterbetrieb auch entgegengesetzt zu der im Netzbetrieb sein.

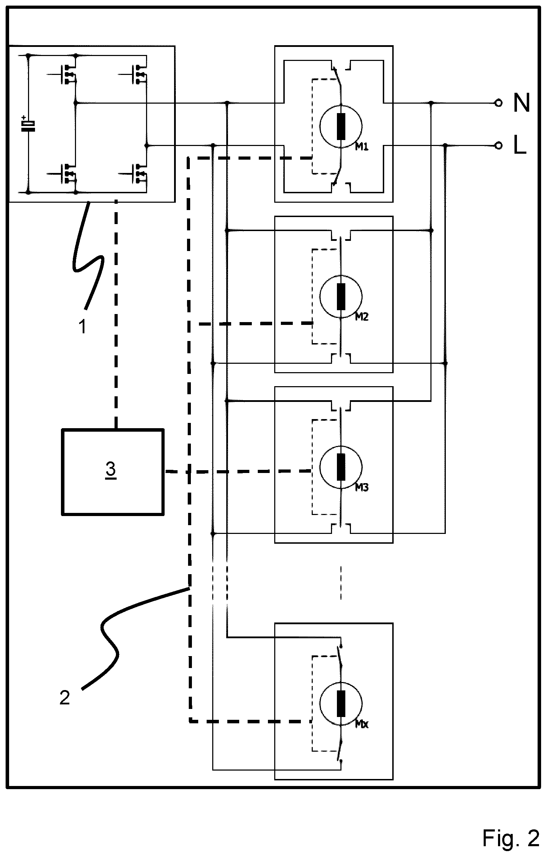

In Figur 2 ist eine zweite Ausführungsform schematisch gezeigt. In dem hier gezeigten Haushaltsgerät sind zusätzlich zu den Elementen der Ausführungsform der Figur 1 weitere Motoren M2, M2, M3... Mx gezeigt. Mit dieser Ausführungsform wird es möglich, flexibel einen oder mehrere Motoren wahlweise am Wechselspannungsnetz N, L oder dem Frequenzumrichter 1 zu betreiben. In einer bevorzugten Ausführungsform wird maximal ein Motor am Frequenzumrichter betrieben, während alle anderen oder eine Teilmenge davon am Wechselspannungsnetz N, L betrieben werden. Dieser eine Motor kann dann wie vorstehend beschrieben mit einer variablen Drehzahl und optionaler Lastsensierung betrieben werden.

Es können grundsätzlich aber auch mehrere Motoren entsprechend betrieben werden, mit der Einschränkung, dass diese am Frequenzumrichter nicht mit individuellen bzw. verschiedenen Drehzahlen betrieben werden können. Auch die Lastsensierung ist dann nur gemeinsam möglich.

Mit nur einem Frequenzumrichter ist mit dieser Ausführungsform ein sehr flexibler Betrieb von mehreren Motoren möglich. Eine Übergabe einzelner oder mehrerer Motoren zwischen Frequenzumrichter und Wechselspannungsnetz ist je nach Anforderung im Haushaltsgerät möglich. Da nicht für jeden Motor ein eigener Frequenzumrichter benötigt wird, können die Herstellungskosten des Haushaltsgeräts niedrig gehalten werden. Durch das Umschalten auf den effizienteren Netzbetrieb kann der Energieverbrauch des Haushaltsgeräts verringert werden.

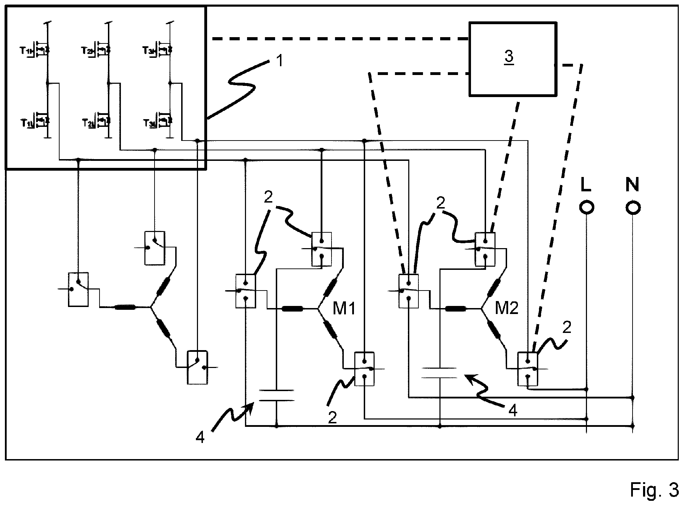

In Figur 3 ist eine dritte Ausführungsform schematisch gezeigt. Diese Ausführungsform ist ähnlich der von Figur 2, wobei jedoch 3-phasige Motoren M1, M2 vorhanden sind, sowie ein weiterer Motor, der ausschließlich am Frequenzumrichter 1 betrieben oder komplett abgeschaltet werden kann. Der Frequenzumrichter 1 ist ebenfalls 3-phasig ausgeführt, d.h. mit 3 Halbbrücken. Um die 3-phasigen Motoren am 1-phasigen Wechselspannungsnetz N, L betreiben zu können, ist hier weiterhin für jeden Motor M1, M2 ein Kondensator 4 vorhanden, um eine entsprechende Phasenlage für den Betrieb zu erzeugen.

Der Übersicht halber sind in Figur 3 nur die Verbindungen der Steuereinheit zu den Schaltern der Schalteinheit des Motors M2 gezeigt, die Steuereinheit ist aber natürlich ebenfalls funktionsfähig mit den Schaltern des Motors M1 verbunden, die insgesamt die Schaltvorrichtung 2 bilden.

## Patentansprüche

1. Haushaltsgerät zum Betrieb an einem Wechselspannungsnetz (N, L) mit fester Frequenz, umfassend:
- mindestens einen elektrischen Synchronmotor (M1, M2, M3, Mx);
- einen Frequenzumrichter (1);
- eine Schaltvorrichtung (2), die dazu eingerichtet ist, den mindestens einen Synchronmotor (M1, M2, M3, Mx) wahlweise entweder mit dem Frequenzumrichter (1) oder dem Wechselspannungsnetz (N, L) zu verbinden; und
- eine Steuereinheit (3), die dazu eingerichtet ist
- den mindestens einen Synchronmotor (M1, M2, M3, Mx) mittels der Schaltvorrichtung (2) mit dem Frequenzumrichter (1) zu verbinden, um den Synchronmotor (M1, M2, M3, Mx) anlaufen zu lassen, wobei der Frequenzumrichter (1) mit einer Frequenz betrieben wird, die geringer ist als die feste Frequenz des Wechselspannungsnetzes (N, L);
- nach dem Anlaufen des Synchronmotors (M1, M2, M3, Mx) die Frequenz des Frequenzumrichters (1) zu erhöhen;
- den mindestens einen Synchronmotor (M1, M2, M3, Mx) mittels der Schaltvorrichtung (3) von dem Frequenzumrichter (1) zu trennen und mit dem Wechselspannungsnetz (N, L) zu verbinden; **dadurch gekennzeichnet, dass** die Steuereinheit (3) eingerichtet ist
- den mindestens einen Synchronmotor (M1, M2, M3, Mx) sporadisch mit dem Frequenzumrichter (1) zu betreiben, um eine Lastsensierung vorzunehmen.

2. Haushaltsgerät nach Anspruch 1, wobei die Steuereinheit (3) weiter dazu eingerichtet ist, den mindestens einen Synchronmotor (M1, M2, M3, Mx) mittels der Schaltvorrichtung (2) von dem Wechselspannungsnetz (N, L) zu trennen und mit dem Frequenzumrichter (1) zu verbinden.

3. Haushaltsgerät nach Anspruch 1 oder 2, wobei die Frequenz und Phasenlage des Frequenzumrichters (1) vor dem Umschalten des Synchronmotors (M1, M2, M3, Mx) zwischen Frequenzumrichter (1) und Wechselspannungsnetz (N, L) an die Frequenz und Phasenlage des Wechselspannungsnetzes (N, L) angenähert werden, bevorzugt auf im Wesentlichen die gleiche Frequenz und Phasenlage.

4. Haushaltsgerät nach einem der vorhergehenden Ansprüche, umfassend zwei oder mehr elektrische Synchronmotoren (M1, M2, M3, Mx).

5. Haushaltsgerät nach einem der vorhergehenden Ansprüche, wobei das Wechselspannungsnetz ein 1-phasiges Netz ist, mindestens ein Synchronmotor (M1, M2, M3, Mx) 3-strängig ist und mit einem Hilfs-Kondensator (4) an dem Wechselspannungsnetz (N, L) betrieben wird.

6. Haushaltsgerät nach einem der vorhergehenden Ansprüche 1 bis 4, wobei das Wechselspannungsnetz (N, L) ein 1-phasiges Netz ist, mindestens ein Synchronmotor (M1, M2, M3, Mx) 2-strängig ist und mit einem Hilfs-Kondensator (4) an dem Wechselspannungsnetz (N, L) betrieben wird.

7. Haushaltsgerät nach einem der vorhergehenden Ansprüche 1 bis 4, wobei das Wechselspannungsnetz (N, L) mit fester Frequenz ein 1-phasiges Netz ist, der Frequenzumrichter (1) 3-phasig (R, S, T) ist, mindestens ein Synchronmotor (M1, M2, M3, Mx) 3-strängig ist und mit einem Hilfs-Kondensator (4) an dem Wechselspannungsnetz (N, L) betrieben wird.

8. Haushaltsgerät nach einem der vorhergehenden Ansprüche 1 bis 4, wobei das Wechselspannungsnetz (N, L) mit fester Frequenz ein 1-phasiges Netz ist, der Frequenzumrichter (1) 3-phasig (R, S, T) ist, mindestens ein Synchronmotor (M1, M2, M3, Mx) 1-strängig ist und an 2 Phasen (R, S) des Frequenzumrichters (1) betrieben wird.

9. Haushaltsgerät nach einem der vorhergehenden Ansprüche 1 bis 4, wobei das Wechselspannungsnetz (N, L) mit fester Frequenz ein 1-phasiges Netz ist, der Frequenzumrichter (1) 3-phasig (R, S, T) ist, mindestens ein Synchronmotor (M1, M2, M3, Mx) 2-strängig ist und mit einem Hilfs-Kondensator (4) an dem Wechselspannungsnetz (N, L) betrieben wird.

10. Haushaltsgerät nach einem der vorhergehenden Ansprüche 1 bis 4, wobei das Wechselspannungsnetz (N, L) mit fester Frequenz ein 1-phasiges Netz ist, der Frequenzumrichter (1) 2-phasig ist, mindestens ein Synchronmotor (M1, M2, M3, Mx) 2-strängig ist und mit einem Hilfs-Kondensator (4) an dem Frequenzumrichter (1) oder einem Hilfskondensator (4) an dem Wechselspannungsnetz (N, L) betrieben wird.

11. Haushaltsgerät nach einem der vorhergehenden Ansprüche 1 bis 4, wobei das Wechselspannungsnetz (N, L) mit fester Frequenz ein 1-phasiges Netz ist, der Frequenzumrichter (1) 2-phasig ist und mindestens ein Synchronmotor (M1, M2, M3, Mx) 1-strängig ist.

## Claims

1. Domestic appliance for operation on an alternating voltage network (N, L) which has a fixed frequency, comprising:
- at least one electric synchronous motor (M1, M2, M3, Mx);
- a frequency converter (1);
- a switching device (2) which is configured to selectively connect the at least one synchronous motor (M1, M2, M3, Mx) either to the frequency converter (1) or to the alternating voltage network (N, L); and
- a control unit (3) which is configured:
- to connect the at least one synchronous motor (M1, M2, M3, Mx) to the frequency converter (1) by means of the switching device (2) in order to start the synchronous motor (M1, M2, M3, Mx), the frequency converter (1) being operated at a lower frequency than the fixed frequency of the alternating voltage network (N, L);
- to increase the frequency of the frequency converter (1) after starting the synchronous motor (M1, M2, M3, Mx);
- to disconnect the at least one synchronous motor (M1, M2, M3, Mx) from the frequency converter (1) by means of the switching device (3) and to connect the synchronous motor to the alternating voltage network (N, L);
**characterised in that** the control unit (3) is configured:
- to sporadically operate the at least one synchronous motor (M1, M2, M3, Mx) with the frequency converter (1) in order to perform load sensing.

2. Domestic appliance according to claim 1, wherein the control unit (3) is further configured to disconnect the at least one synchronous motor (M1, M2, M3, Mx) from the alternating voltage network (N, L) by means of the switching device (2) and to connect the synchronous motor to the frequency converter (1).

3. Domestic appliance according to claim 1 or claim 2, wherein the frequency and the phase position of the frequency converter (1) are approximated to the frequency and to the phase position of the alternating voltage network (N, L), preferably to substantially the same frequency and phase position, before the synchronous motor (M1, M2, M3, Mx) is switched between the frequency converter (1) and the alternating voltage network (N, L).

4. Domestic appliance according to any of the preceding claims, comprising two or more electric synchronous motors (M1, M2, M3, Mx).

5. Domestic appliance according to any of the preceding claims, wherein the alternating voltage network is a 1-phase network, and at least one synchronous motor (M1, M2, M3, Mx) is 3-strand and is operated with an auxiliary capacitor (4) on the alternating voltage network (N, L).

6. Domestic appliance according to any of the preceding claims 1 to 4,
wherein the alternating voltage network (N, L) is a 1-phase network, and at least one synchronous motor (M1, M2, M3, Mx) is 2-strand and is operated with an auxiliary capacitor (4) on the alternating voltage network (N, L).

7. Domestic appliance according to any of the preceding claims 1 to 4,
wherein the alternating voltage network (N, L) which has a fixed frequency is a 1-phase network, the frequency converter (1) is 3-phase (R, S, T), and at least one synchronous motor (M1, M2, M3, Mx) is 3-strand and is operated with an auxiliary capacitor (4) on the alternating voltage network (N, L).

8. Domestic appliance according to any of the preceding claims 1 to 4,
wherein the alternating voltage network (N, L) which has a fixed frequency is a 1-phase network, the frequency converter (1) is 3-phase (R, S, T), and at least one synchronous motor (M1, M2, M3, Mx) is 1-strand and is operated on 2 phases (R, S) of the frequency converter (1).

9. Domestic appliance according to any of the preceding claims 1 to 4,
wherein the alternating voltage network (N, L) which has a fixed frequency is a 1-phase network, the frequency converter (1) is 3-phase (R, S, T), and at least one synchronous motor (M1, M2, M3, Mx) is 2-strand and is operated with an auxiliary capacitor (4) on the alternating voltage network (N, L).

10. Domestic appliance according to any of the preceding claims 1 to 4,
wherein the alternating voltage network (N, L) which has a fixed frequency is a 1-phase network, the frequency converter (1) is 2-phase, and at least one synchronous motor (M1, M2, M3, Mx) is 2-strand and is operated with an auxiliary capacitor (4) on the frequency converter (1) or with an auxiliary capacitor (4) on the alternating voltage network (N, L).

11. Domestic appliance according to any of the preceding claims 1 to 4,
wherein the alternating voltage network (N, L) which has a fixed frequency is a 1-phase network, the frequency converter (1) is 2-phase, and at least one synchronous motor (M1, M2, M3, Mx) is 1-strand.

## Revendications

1. Appareil électroménager destiné à fonctionner sur un réseau de tension alternative (N, L) à fréquence fixe, comprenant :
- au moins un moteur synchrone (M1, M2, M3, Mx) électrique ;
- un convertisseur de fréquence (1) ;
- un dispositif de commutation (2) configuré pour connecter sélectivement l'au moins un moteur synchrone (M1, M2, M3, Mx) soit au convertisseur de fréquence (1), soit au réseau de tension alternative (N, L) ; et
- une unité de commande (3) qui est configurée pour
- connecter l'au moins un moteur synchrone (M1, M2, M3, Mx) au convertisseur de fréquence (1) au moyen du dispositif de commutation (2) afin de faire démarrer le moteur synchrone (M1, M2, M3, Mx), dans lequel le convertisseur de fréquence (1) fonctionne à une fréquence qui est inférieure à la fréquence fixe du réseau de tension alternative (N, L) ;
- augmenter la fréquence du convertisseur de fréquence (1) après le démarrage du moteur synchrone (M1, M2, M3, Mx) ;
- déconnecter l'au moins un moteur synchrone (M1, M2, M3, Mx) du convertisseur de fréquence (1) au moyen du dispositif de commutation (3) et le connecter au réseau de tension alternative (N, L) ; **caractérisé en ce que** l'unité de commande (3) est configurée pour
- faire fonctionner sporadiquement l'au moins un moteur synchrone (M1, M2, M3, Mx) avec le convertisseur de fréquence (1) afin de procéder à une détection de charge.

2. Appareil électroménager selon la revendication 1, dans lequel l'unité de commande (3) est en outre configurée pour déconnecter l'au moins un moteur synchrone (M1, M2, M3, Mx) du réseau de tension alternative (N, L) au moyen du dispositif de commutation (2) et le connecter au convertisseur de fréquence (1).

3. Appareil électroménager selon la revendication 1 ou 2, dans lequel la fréquence et la position de phase du convertisseur de fréquence (1) sont rapprochées de la fréquence et de la position de phase du réseau de tension alternative (N, L) avant la commutation du moteur synchrone (M1, M2, M3, Mx) entre le convertisseur de fréquence (1) et le réseau de tension alternative (N, L), de préférence sensiblement à la même fréquence et à la même position de phase.

4. Appareil électroménager selon l'une des revendications précédentes, comprenant deux moteurs synchrones (M1, M2, M3, Mx) électriques ou plus.

5. Appareil électroménager selon l'une des revendications précédentes, dans lequel le réseau de tension alternative est un réseau monophasé, au moins un moteur synchrone (M1, M2, M3, Mx) est à 3 brins et fonctionne avec un condensateur auxiliaire (4) sur le réseau de tension alternative (N, L).

6. Appareil électroménager selon l'une des revendications précédentes 1 à 4, dans lequel le réseau de tension alternative (N, L) est un réseau monophasé, au moins un moteur synchrone (M1, M2, M3, Mx) est à 2 brins et fonctionne avec un condensateur auxiliaire (4) sur le réseau de tension alternative (N, L).

7. Appareil électroménager selon l'une des revendications précédentes 1 à 4, dans lequel le réseau de tension alternative (N, L) à fréquence fixe est un réseau monophasé, le convertisseur de fréquence (1) est triphasé (R, S, T), au moins un moteur synchrone (M1, M2, M3, Mx) est à 3 brins et fonctionne avec un condensateur auxiliaire (4) sur le réseau de tension alternative (N, L).

8. Appareil électroménager selon l'une des revendications précédentes 1 à 4, dans lequel le réseau de tension alternative (N, L) à fréquence fixe est un réseau monophasé, le convertisseur de fréquence (1) est triphasé (R, S, T), au moins un moteur synchrone (M1, M2, M3, Mx) est à 1 brin et fonctionne sur 2 phases (R, S) du convertisseur de fréquence (1).

9. Appareil électroménager selon l'une des revendications précédentes 1 à 4, dans lequel le réseau de tension alternative (N, L) à fréquence fixe est un réseau monophasé, le convertisseur de fréquence (1) est triphasé (R, S, T), au moins un moteur synchrone (M1, M2, M3, Mx) est à 2 brins et fonctionne avec un condensateur auxiliaire (4) sur le réseau de tension alternative (N, L).

10. Appareil électroménager selon l'une des revendications précédentes 1 à 4, dans lequel le réseau de tension alternative (N, L) à fréquence fixe est un réseau monophasé, le convertisseur de fréquence (1) est biphasé, au moins un moteur synchrone (M1, M2, M3, Mx) est à 2 brins et fonctionne avec un condensateur auxiliaire (4) sur le convertisseur de fréquence (1) ou avec un condensateur auxiliaire (4) sur le réseau de tension alternative (N, L).

11. Appareil électroménager selon l'une des revendications précédentes 1 à 4, dans lequel le réseau de tension alternative (N, L) à fréquence fixe est un réseau monophasé, le convertisseur de fréquence (1) est biphasé et au moins un moteur synchrone (M1, M2, M3, Mx) est à 1 brin.
